# EUROPEAN PATENT APPLICATION

(11) **EP 2 964 002 A1**
(43) Date of publication of application: **06.01.2016**
(21) Application number: 13840181.5
(22) Date of filing: 28.03.2013
(51) Int. Cl.: H05B 37/02

(54) **LED LAMP CONTROLLER, LED LAMP AND DRIVE METHOD FOR LED LAMP**

(30) Priority: 25.02.2013 CN 201310058096
(71) Applicant: Yan, Huiping, Jiangsu 213399 (CN)
(72) Inventor: Yan, Huiping, Jiangsu 213399 (CN)
(74) Representative: Casalonga
(86) International application number: PCT/CN2013/073319
(87) International publication number: WO 2014/127554

(57) **Abstract**

The present invention discloses a controlling device for LED decorative lights, a LED decorative light and a controlling method for LED decorative lights. A controlling device for LED decorative lights includes a power inverting module, a multi-mode controlling signal emitting module being coupled with the said power inverting module. The said multi-mode controlling signal emitting module further includes a monitoring component, a signal distributing device coupled with the monitoring component and a signal socket connected with an external LED light. The said signal distributing device is able to output two PWM (Pulse Width Modulation) driving signals to the said signal socket. The present invention only requires two signal cables and two driving signals to achieve the display control for lights, and therefore is economical.

## Description

### Technical field

The present invention relates to lighting, particularly to a controlling device for LED decorative lights, LED decorative lights and a controlling method for LED decorative lights.

### Technical background

A two-loop LED decorative light under the existing technology includes multiple electrodeless light strips, and each light strip further includes multiple light beads being connected in parallel. It works with three controlling cables, among which two are signal cables and one is shared cable. The number of cables results in high cost of material and controlling, which is unfavorable to decrease cost.

### Detailed description of the invention

The object of the present invention is to provide a low-cost controlling device for LED decorative lights, a LED light and a driving method for LED decorative lights.

The object of the present invention is realized through the following technical scheme:
A controlling device for LED decorative lights includes a power inverting module, a multi-mode controlling signal emitting module being coupled with the said power inverting module; the said multi-mode controlling signal emitting module includes a monitoring component, a signal distributing device coupled with the monitoring component and a signal socket connected with an external LED light; the said signal distributing device is able to output two PWM driving signals to the said signal socket.

Further, the said monitoring component includes a single-chip computer being coupled with the said signal distributing device and a mode controlling unit being coupled with the said single-chip computer.

Further, the said mode controlling unit further includes a mode controlling button.

Further, the said multi-mode controlling signal emitting module further includes a DC input unit being coupled with the said power inverting module and the said single-chip computer, the said mode controlling unit, the said signal distributing device and the said signal socket are coupled with the said DC input unit.

Further, the said two PWM driving signals alternate between each other to realize the rapid switch control of the two different groups of LED light beads.

Further, the said power inverting module further includes a AC input unit, a rectifier filter unit being coupled with the said AC input unit, a resonant inverter unit being coupled with the said rectifier filter, a buck rectifier unit being coupled with the said resonant inverter and a constant-current controlling unit, and the said buck rectifier is being coupled with the said multi-mode controlling signal emitting module.

A LED light including an electrodeless light includes a light strip in parallel; the said light strip includes a first signal cable and a second signal cable; a first light set and a second light set with light beads are connected between the said first signal cable and the second signal cable; the said first light set and the second light set are connected in parallel; the positive pole of the light beads of the said first light set is connected with the first signal cable, and the negative pole of which is connected with the second signal cable; the negative pole of the light beads of the said second light set is connected with the first signal cable, and the positive pole of which is connected with the second signal cable; the said first signal cable and the second signal cable are coupled respectively with the said signal socket of the said controlling device for a LED light.

Further, the number of the said light strip is more than two; the said light strips are connected in parallel; the said first signal cable of each light strip in parallel is coupled with the second signal cable of the previous light strip in parallel or the said signal socket of the said controlling device for LED light; the said second signal cable of each light strip in parallel is coupled with the first signal cable of the following light strip in parallel or the said signal socket of the said controlling device for LED light.

A driving method for LED light as described above includes the following steps:
A. the PWM driving signal is connected with the first signal cable;
B. the PWM driving signal is connected with the second signal cable; return to Step A.

Further, Step A1 is further included between Step A and Step B: it returns to Step A once the PWM driving signal is disconnected and it switches to Step B once the number of returning reaches the predefined value;

The said Step B further includes that the PWM driving signal is connected to the second signal cable once the PWM driving signal is disconnected and it returns to Step A once the number of repetition reaches the predefined value.

A controlling device for LED decorative lights of the present invention includes a power inverting module, a multi-mode controlling signal emitting module being coupled with the said power inverting module; the said multi-mode controlling signal emitting module includes a monitoring component, a signal distributing device coupled with the monitoring component and a signal socket connected with an external LED light; the said signal distributing device is able to output two PWM driving signals to the said signal socket. The LED decorative lights of the present invention include electrodeless light strips which include light strips in parallel; the light strips in parallel include a first signal cable and a second signal cable; more than two LED beads are connected between the said first signal cable and the second signal cable; the positive pole of at least one LED bead is connected with the first signal cable and its negative pole is connected with the second signal cable; the negative pole of at least one LED bead is connected with the first signal able and its positive pole is connected with the second signal cable; the first signal cable and the second signal cable are coupled respectively with the said signal socket of the controlling device for LED decorative lights of the present invention; the LED bead whose positive pole is connected with the first signal cable lights on once the PWM driving signal is connected to the first signal cable; on the contrary, the LED bead whose positive pole is connected with the second signal cable lights on once the PWM driving signal is connected to the second signal cable; in this way, the two different light sets alternates between each other or the luminance of the lighting set is controlled to realize a desired effect. It only requires two signal cables and two driving signals to achieve the display control for lights, and therefore is economical.

### Description of figures

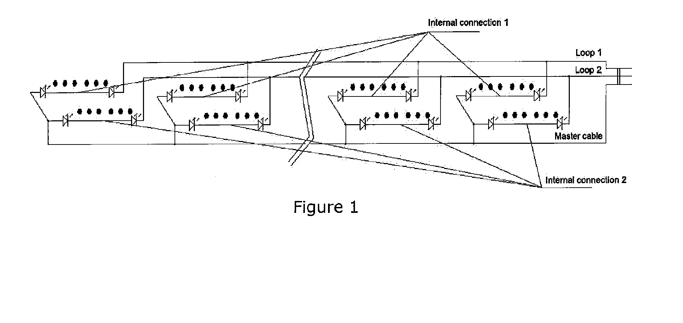

Figure 1 is a sketch of a sample light of the existing technology
Figure 2 is a sketch of a controlling device for LED decorative lights embodied by the present invention
Figure 3 is an exploded view of a controlling device for LED decorative lights embodied by the present invention
Figure 4 is a framework view of a controlling device for LED decorative lights embodied by the present invention
Figure 5 is a schematic diagram of a controlling device for LED decorative lights embodied by the present invention
Figure 6 is a flow chart of the driving method for LED decorative lights embodied by the present invention
Figure 7 is a sketch for an electrodeless LED light embodied by the present invention
Figure 8 is a sketch of the light strips in parallel for an electrodeless LED light embodied by the present invention
Figure 9 is a sketch of 6 light strips in series to form an electrodeless LED light embodied by the present invention
Figure 10 is a sketch of 10 light beads in parallel to form a light strip embodied by the present invention
Figure 11 is an overall sketch of LED decorative light embodied by the present invention

### Numeric indications in the figures:

10, A controlling device for LED decorative lights; 11, Casing; 12, Mode controlling button; 13, Power plug; 14, Signal socket; 15, Circuit boa rd;
20, Power inverting module; 21, AC input unit; 22, Rectifier filter unit; 23, Constant current control unit; 24, Resonant inverter unit; 25, Buck rectifier unit; 30, Multi-mode controlling signal emitting module; 31, DC input unit; 32, Monitoring component; 33, Mode controlling unit; 34, Single-chip computer; 35, Signal distributing device; 41, First signal cable; 42, Second signal cable; 50, Light strip in parallel; L1, First light set; L2, Second light set; 60, Electrodeless LED light

### Implementation of the invention

The present invention discloses a controlling device for LED decorative lights which includes a power inverting module, a multi-mode controlling signal emitting module being coupled with the said power inverting module; the said multi-mode controlling signal emitting module includes a monitoring component, a signal distributing device coupled with the monitoring component and a signal socket connected with an external LED light; the said signal distributing device is able to output two PWM driving signals to the said signal socket.

The LED decorative lights of the present invention include electrodeless light strips which include light strips in parallel; the light strips in parallel include a first signal cable and a second signal cable; more than two LED beads are connected between the said first signal cable and the second signal cable; the positive pole of at least one LED bead is connected with the first signal cable and its negative pole is connected with the second signal cable; the negative pole of at least one LED bead is connected with the first signal able and its positive pole is connected with the second signal cable; the first signal cable and the second signal cable are coupled respectively with the said signal socket of the controlling device for LED decorative lights of the present invention; the LED bead whose positive pole is connected with the first signal cable lights on once the PWM driving signal is connected to the first signal cable; on the contrary, the LED bead whose positive pole is connected with the second signal cable lights on once the PWM driving signal is connected to the second signal cable; in this way, the two different light sets alternates between each other or the luminance of the lighting set is controlled to realize a desired effect. It only requires two signal cables and two driving signals to achieve the display control for lights, and therefore is economical.

The present invention is further described in details with figures and preferred embodiments as follows.

### Embodiment 1

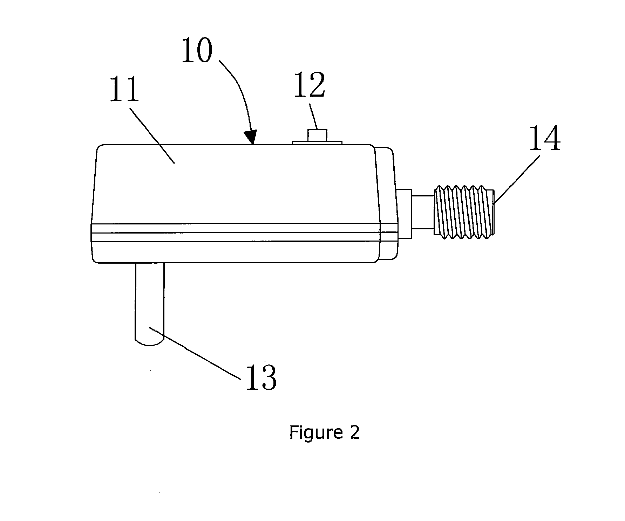

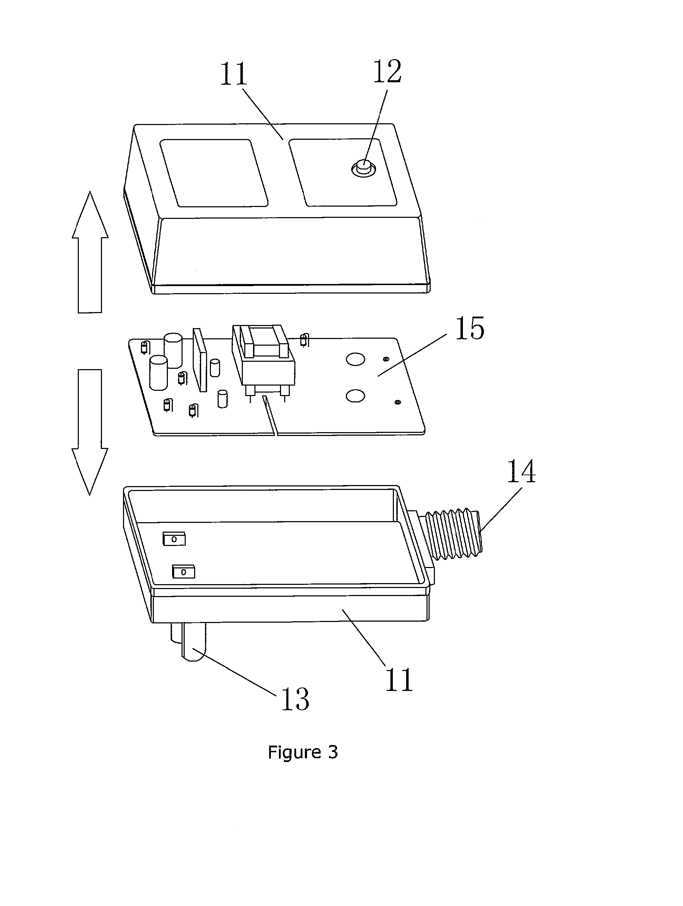

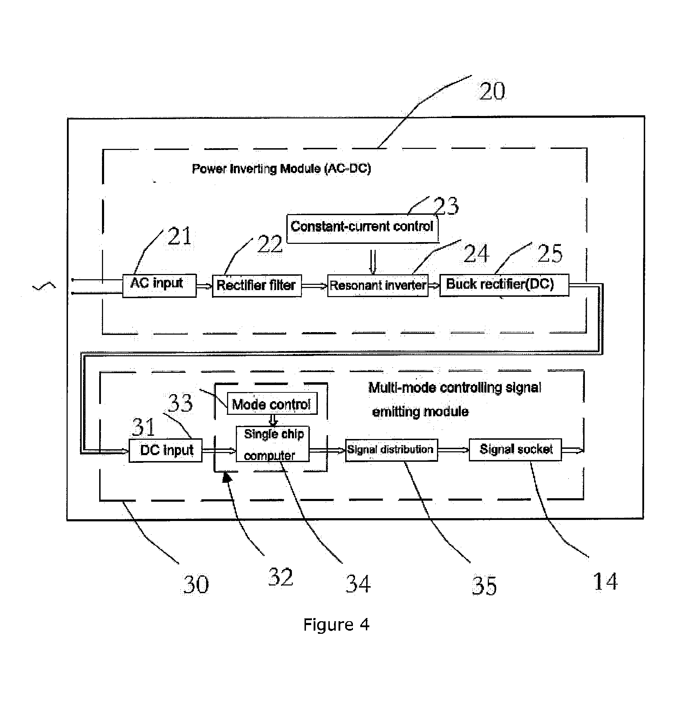

As shown in Figures 2-4, the controlling device for LED decorative lights (10) in this embodiment includes a casing (11); a circuit board (15) is placed in the casing (11) and the power input of the circuit board (15) is connected with power plug (13). The circuit board (15) is designed with a power inverting module (20), a multi-mode controlling signal emitting module (30) being coupled with the said power inverting module (20); the said multi-mode controlling signal emitting module (30) includes a monitoring component (32), a signal distributing device (35) being coupled with the monitoring component (32) and a signal socket (14) being connected with an external LED light; the signal distributing device (35) is able to output two PWM driving signals to the signal socket (14) to realize the rapid switch control of the two different groups of LED light beads.

The monitoring component (32) includes a single-chip computer (34) being coupled with the signal distributing device (35) and a mode control unit (33) being coupled with the single-chip computer (34); the mode control unit (33) includes a mode control button (12). Thus, by simply pressing the button, one can select different modes of display of LED light strips (electrodeless LED decorative lights).

The multi-mode controlling signal emitting module (30) includes a DC input unit (31) being coupled with the power inverting module (20). The single-chip computer (34), the mode control unit (33), the signal distributing (35) and the signal socket (14) are coupled with DC input unit (31).

The power inverting module 20 includes an AC input unit (21), a rectifier filter unit (22) being coupled with the AC input unit (21), a resonant rectifier (24) being coupled with the rectifier filter unit (22), a buck rectifier (25) being coupled with the resonant rectifier (24) and a constant current control unit (23). The buck rectifier (25) is coupled with the multi-mode controlling signal emitting module (30).

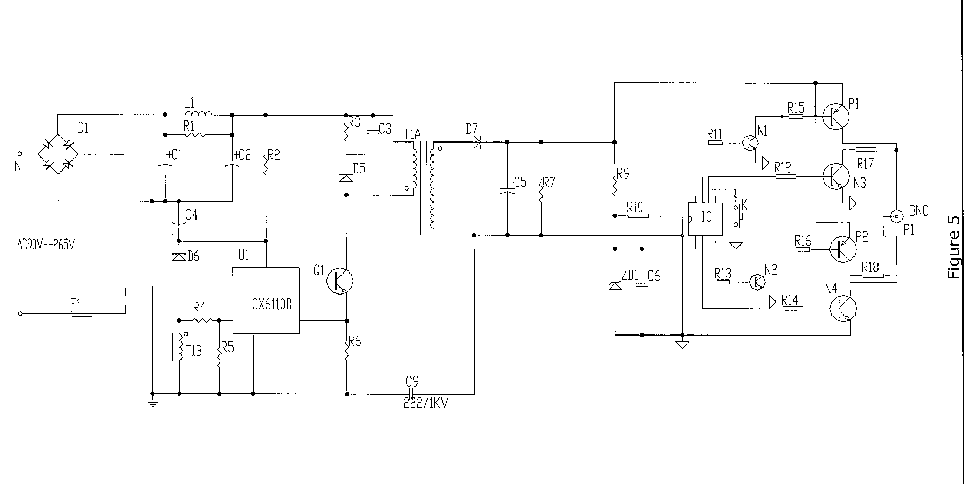

The circuit diagram of this embodiment refers to Figure 5.

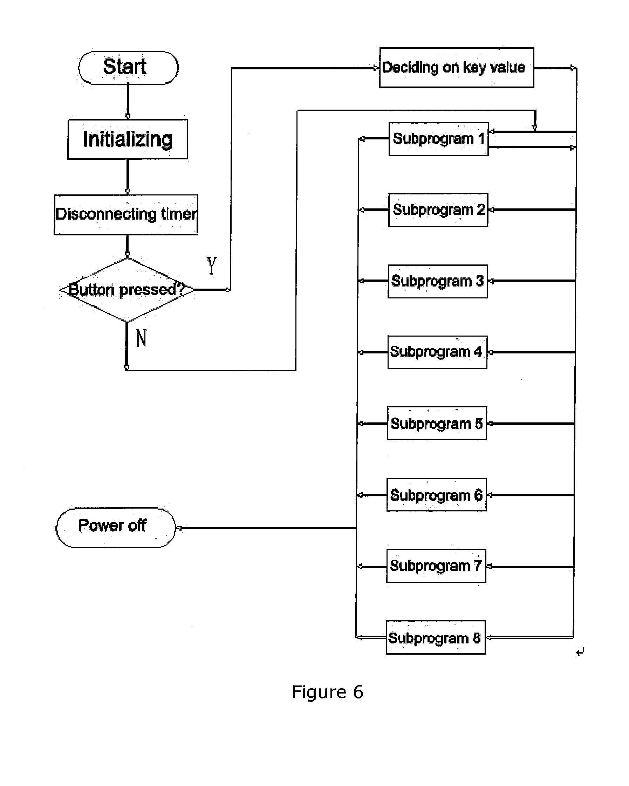

As shown in Figure 6, the display mode of LED decorative lights may be preprogrammed in the single-chip computer (34) of the controlling device for LED decorative lights (10) of the present invention. As shown in the subprograms 1-8 of the figure, each subprogram accords to a display mode. Once the program starts to run, it checks whether the mode control button (12) is pressed and then decides to run which subprogram based on the key value. The key value may be associated with the number of pressing on the button or the duration of time of pressing on the button. The display mode of this embodiment is shown in Table 1 below.

**Table 1: Display Mode of LED decorative lights**

| | |
|---|---|
| 1 | Autocycle (automatic cycle of Mode 2 to 7 below) |
| 2 | Rapid alternation of light-on and light-off of two adjacent LED beads (L1 on, L2 off; L1 off, L2 on) |
| 3 | Alternation of light-on and light-off of two adjacent LED beads with 3 different frequency (L1 on, L2 off; L1 off, L2 on) |
| 4 | Alternation of light-on and light-off of two adjacent LED beads(L1 from ON to OFF, L2 from OFF to ON; L1 from OFF to ON, L2 from ON to OFF) |
| 5 | Alternation of light-on and light-off of two adjacent LED beads (L1 strobes 3 times then OFF, meantime L2 changes from OFF to "strobes 3 times"; L1 strobes 2 times then OFF, L2 Changes from OFF to "strobes 2 times". |
| 6 | Constant light (L1 and L2 maintain stable luminance) |
| 7 | Slow occulting (The luminance of L1 and L2 fades gradually to OFF and then lights on gradually again. L1 and L2 change simultaneously.) |
| 8 | Alternation of light-on and light-off of two adjacent LED beads (L1 strobes 3 times then OFF, meantime L2 changes from OFF to "strobes 3 times". This mode repeats constantly.) |

### Embodiment 2

This embodiment discloses a LED decorative light applying the controlling device for LED decorative lights (10) of the present invention.

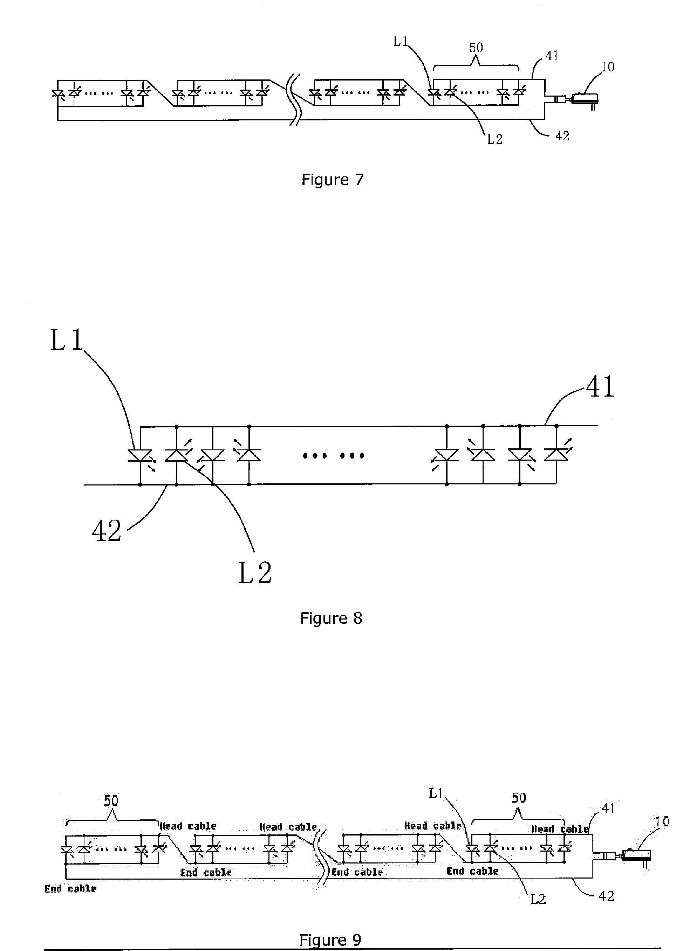

As shown in Figures 7, 8 and 11, the LED decorative lights disclosed by this embodiment include an electrodeless light strip (60). The electrodeless light strip (60) includes light strips in parallel (50), which includes the first signal cable (41) and the second signal cable (42). More than two LED light beads are connected between the first signal cable (41) and the second signal cable (42). The positive pole of at least one LED bead is connected with the first signal cable (41) and its negative pole is connected with the second signal cable (42); the negative pole of at least one LED bead is connected with the first signal able (41) and its positive pole is connected with the second signal cable (42); the first signal cable (41) and the second signal cable (42) are coupled respectively with the said signal socket of the controlling device for LED decorative lights (10). The LED beads whose positive pole is connected with the first signal cable (41) form the first light set (L1) and the LED beads whose positive pole is connected with the second signal cable (42) form the second light set (L2). The first light set (L1) and the second light set (L2) are connected in parallel. As the connection of the first light set (L1) and the second light set (L2) is in an opposite way, only one light set will light on in practice. As long as only one signal cable is connected to PWM driving signal at one time, one light set will light on while the other will light off. In this way, PMW driving signal is connected alternately to the first signal cable (41) and the second signal cable (42), the two different light set will light on alternately. By regulating the duty cycle of the PWM driving signal, the luminance of the light set can be regulated accordingly in order to realize the desired display effect.

The light strips in parallel (50) can be multiple and all light strips (50) are connected in parallel. The first signal cable (41) of each light strip in parallel (50) is coupled with the second signal cable (42) of the previous light strip in parallel (50) or the signal socket of the controlling device for LED decorative lights (10); the second signal cable (42) of each light strip (50) is coupled with the first signal cable (41) of the following light strip (50) or the signal socket of the controlling device for LED decorative lights (10).

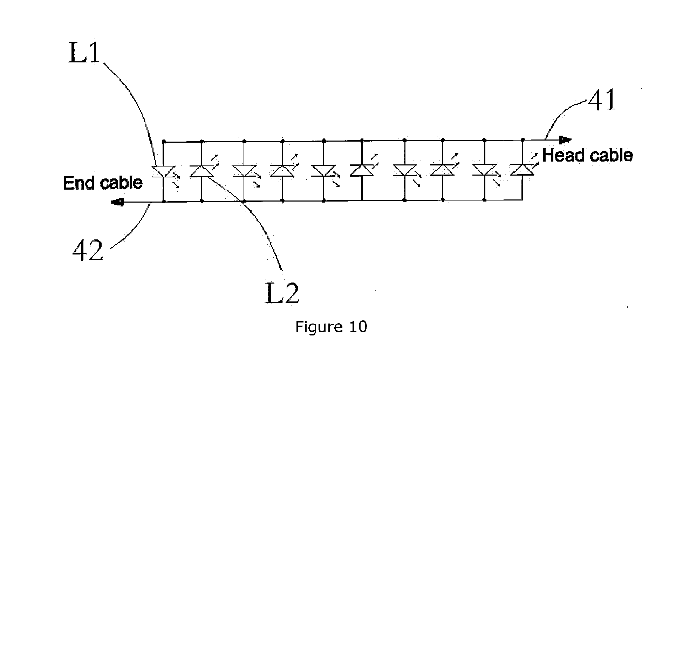

As shown in Figure 9 and 10, each light strip in parallel (50) is designed with 10 LED beads, namely each light set is designed with 5 LED beads. The light strips in parallel (50) are connected in series so as to form an electrodeless LED light bar. Finally, the first light strip in parallel (50) and the last one form two signal cables that are connected to the signal socket of the controlling device for LED decorative lights (10).

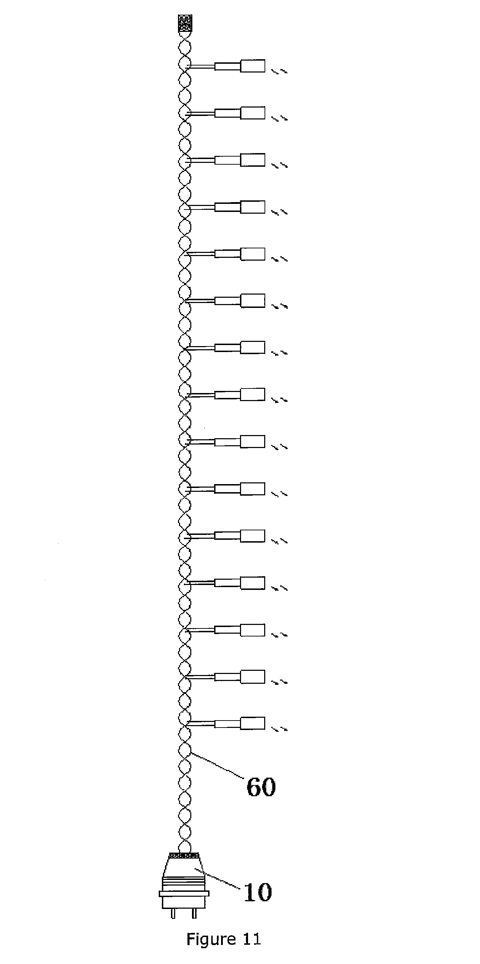

Figure 11 is an overall sketch of LED decorative light embodied by the present invention.

### Embodiment 3

This embodiment discloses a driving method for LED decorative lights, which include the following steps:
A. the PWM driving signal is connected with the first signal cable;
B. the PWM driving signal is connected with the second signal cable; return to Step A.

In order to enhance display effect, Step A1 is further included between Step A and Step B: it returns to Step A once the PWM driving signal is disconnected and it switches to Step B once the number of returning reaches "N". The said Step B further includes that the PWM driving signal is connected to the second signal cable once the PWM driving signal is disconnected and it returns to Step A once the number of repetition reaches "N". In this case, "N" is a natural number. By further including Step A1, a light set is able to strobe for several times before switching to the other light set. In this way, the display effect is enhanced the application of the product is widened.

As shown in Figure 6, the display mode of LED decorative lights may be preprogrammed in the single-chip computer of the controlling device for LED decorative lights of the present invention. As shown in the subprograms 1-8 of the figure, each subprogram accords to a display mode. Once the program starts to run, it checks whether the mode control button is pressed and then decides to run which subprogram based on the key value. The key value may be associated with the number of pressing on the button or the duration of time of pressing on the button. The display mode of this embodiment is shown in Table 1.

The above embodiments are meant to further describe the present invention in details, shall not be considered to limit it. Those skilled in this art are able to make some simple derivations or replacements without digressing from the scheme of the present invention, which shall be regarded as falling into the scope of protection of the present invention.

## Claims

1. A controlling device for LED decorative lights characterizes in that it includes a power inverting module, a multi-mode controlling signal emitting module being coupled with the said power inverting module. The said multi-mode controlling signal emitting module further includes a monitoring component, a signal distributing device coupled with the monitoring component and a signal socket connected with an external LED light.

2. A controlling device for LED decorative lights as described in Claim 1 characterizes in that the said monitoring component includes a single-chip computer being coupled with the said signal distributing device and a mode controlling unit being coupled with the said single-chip computer.

3. A controlling device for LED decorative lights as described in Claim 2 characterizes in that the said mode controlling unit further includes a mode controlling button.

4. A controlling device for LED decorative lights as described in Claim 3 characterizes in that the said multi-mode controlling signal emitting module further includes a DC input unit being coupled with the said power inverting module and the said single-chip computer, the said mode controlling unit, the said signal distributing device and the said signal socket are coupled with the said DC input unit.

5. A controlling device for LED decorative lights as described in Claim 1 characterizes in that the said two PWM driving signals alternate between each other.

6. A controlling device for LED decorative lights as described in any one from Claim 1 to Claim 5 characterizes in that the said power inverting module further includes a AC input unit, a rectifier filter unit being coupled with the said AC input unit, a resonant inverter unit being coupled with the said rectifier filter, a buck rectifier unit being coupled with the said resonant inverter and a constant-current controlling unit, and the said buck rectifier is being coupled with the said multi-mode controlling signal emitting module.

7. A LED light including an electrodeless light characterizes in that the said electrodeless light includes a light strip in parallel; the said light strip includes a first signal cable and a second signal cable; a first light set and a second light set with light beads are connected between the said first signal cable and the second signal cable; the said first light set and the second light set are connected in parallel; the positive pole of the light beads of the said first light set is connected with the first signal cable, and the negative pole of which is connected with the second signal cable; the negative pole of the light beads of the said second light set is connected with the first signal cable, and the positive pole of which is connected with the second signal cable; the said first signal cable and the second signal cable are coupled respectively with the said signal socket of the said controlling device for a LED light as described in any one from Claim 1 to Claim 6.

8. A LED light as described in Claim 7 characterizes in that the number of the said light strip is more than two; the said light strips are connected in parallel; the said first signal cable of each light strip in parallel is coupled with the second signal cable of the previous light strip in parallel or the said signal socket of the said controlling device for LED light; the said second signal cable of each light strip in parallel is coupled with the first signal cable of the following light strip in parallel or the said signal socket of the said controlling device for LED light.

9. A driving method for LED light as described in Claim 7 or Claim 8 includes the following steps:
A. the PWM driving signal is connected with the first signal cable;
B. the PWM driving signal is connected with the second signal cable; return to Step A.

10. A driving method as described in Claim 9 for LED light as described in Claim 7 or Claim 8 characterizes in that Step A1 is further included between Step A and Step B: it returns to Step A once the PWM driving signal is disconnected and it switches to Step B once the number of returning reaches the predefined value. The said Step B further includes that the PWM driving signal is connected to the second signal cable once the PWM driving signal is disconnected and it returns to Step A once the number of repetition reaches the predefined value.
